(19) Europäisches Patentamt
European Patent Office
Office européen des brevets

(11) Publication number: 0 376 613 A2

# (12) EUROPEAN PATENT APPLICATION

(21) Application number: 89313394.2

(22) Date of filing: 20.12.89

(51) Int. Cl.[5]: C08L 67/00, C08L 23/02, C08L 51/06

(30) Priority: 27.12.88 JP 330130/88

(43) Date of publication of application: 04.07.90 Bulletin 90/27

(84) Designated Contracting States: AT BE CH DE ES FR GB GR IT LI LU NL SE

(71) Applicant: POLYPLASTICS CO. LTD.
3-13, Azuchicho, 2-chome
Chuo-Ku Osaka-shi Osaka(JP)

(72) Inventor: Wada, Mitsuo
109-9-202, Heigaki
Fuji-shi Shizuoka(JP)
Inventor: Usami, Takashi
885-11, Miyajima
Fuji-shi Shizuoka(JP)

(74) Representative: Jackson, Peter et al
HYDE, HEIDE & O'DONNELL 146 Buckingham Palace Road
London SW1W 9TR(GB)

## (54) Improved halogenated polyester resin and process for the preparation thereof.

(57) A halogenated polyester composition having improved impact resistance, rigidity and flame retardancy is produced by melt-kneading (A) 99 to 40 weight parts of a halogen-containing aromatic polyester and (B) 1 to 60 weight parts of (B-1) a copolymer of an alpha-olefin and glycidyl ester of an unsaturated acid or (B-2) a graft copolymer of (B-1) and a polymer of units of the formula (1):

$$-(-CH_2-\overset{\displaystyle R}{\overset{|}{\underset{\underset{\displaystyle X}{|}}{C}}}-)- \qquad (1)$$

solidifying the molten mixture by cooling and for at least one hour in an inert gas atmosphere or under a reduced pressure of less than 1.33 kPa (10 torr) and at a temperature greater than 120°C but not greater than the melting point of the mixture, thereby to effect the solid phase reaction.

EP 0 376 613 A2

# IMPROVED HALOGENATED POLYESTER RESIN AND PROCESS FOR THE PREPARATION THEREOF

The present invention relates to a halogenated polyester resin having excellent impact resistance, stiffness and flame retardancy and a process for the preparation thereof.

Polyester resins display excellent processability, mechanical strength and other physical and chemical characteristics, such that they are widely used in the preparation of automobiles, electrical or electronic appliances, other precision machines, building materials and sundries.

Polyester resins also however have a disadvantage in being highly flammable. In order to overcome this disadvantage, it has been attempted to impart flame retardancy thereto by the addition of various flame retardants (for example, decabromodiphenyl ether or brominated polycarbonate). However, the addition of a flame retardant is problematic in giving a molded article with reduced impact resistance and mechanical characteristics (such as elongation) and which suffers from bleeding of the flame retardant.

Further, it has also been proposed that an olefin or urethane elastomer is added to a polyester resin to improve the mechanical characteristics, particularly impact resistance.

However, the addition of such an elastomer is not sufficiently effective to form a molded article having adequate impact resistance, though the addition can give a molded article improved therein to some extent.

Although it is also possible to improve the impact resistance further by increasing the amount of the elastomer to be added, the addition of an increased amount thereof causes an associated problem of lowering the mechanical characteristics (particularly modulus and stiffness) or chemical resistance inherent in a polyester resin.

Further, the above elastomer is generally flammable, so that the addition of a large amount thereof makes improvements in the flame retardancy of a polyester resin considerably more difficult to achieve.

In view of the above problems, the inventors of the present invention have intensively studied to improve the impact resistance and flame retardancy of a polyester resin without lowering the mechanical strength, particularly stiffness and modulus, and have found that an improved halogenated polyester resin satisfying the above object can be prepared by adding an olefin copolymer comprising an α-olefin and a glycidyl ester of an α,β-unsaturated acid or a graft copolymer comprising said olefin copolymer as a main component to a specified halogenated polyester resin, melt-lneading the obtained mixture and keeping the resulting mixture at a specific temperature to carry out the solid-phase reaction. The present invention has been accomplished on a basis of this finding.

Namely, the present invention relates to an improved halogenated polyester resin which is prepared by melt-kneading

(A) 99 to 40 parts by weight of a flame-retardant aromatic polyester prepared by the polycondensation of (a) a component mainly comprising an aromatic dicarboxylic acid or an ester-forming derivative thereof
with
(b) a component mainly comprising an aliphatic glycol or an ester-forming derivative thereof and
(c) a halogenated ester-forming compound, and having a halogen content of 0.5 to 30% by weight together with

(B) 1 to 60 parts by weight of (B-1) an olefin copolymer comprising an α-olefin and a glycidyl ester of an α,β-unsaturated acid or (B-2) a graft copolymer comprising said olefin copolymer (B-1) and one or more polymers or copolymers mainly comprising repeating units represented by the following general formula (1):

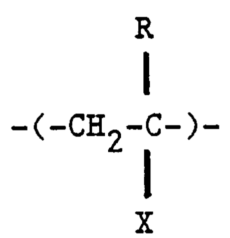

(1)

wherein R is a hydrogen atom or a lower alkyl group and X is one or more groups selected from among -COOH, $-COOR_6$, phenyl and cyano, $R_6$ being an alkyl having 1 to 8 carbon atoms, either straight or

branched, preferably

$$-COOH,\quad -COOCH_3,\quad -COOC_2H_5,\quad -COOC_4H_9,$$

$$-COOCH_2CH(C_2H_5)C_4H_9,$$ 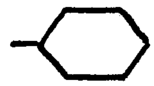 , and $-CN$,

which are chemically bonded to each other to form a branched or crosslinked structure, solidifying the molten mixture by cooling and thermally treating the resulting mixture for at least one hour in an inert gas atmosphere or under a reduced pressure of less than 1.33kPa (10 torr) and at a temperature greater than 120 °C but not greater than the melting point of the mixture, thereby to effect the solid phase reaction of the components (A) and (B). The invention also includes within its scope a process for the preparation of the said halogenated polyester resin. The flame-retardant polyester resins of the present invention have much improved impact resistance, while retaining excellent stiffness and modulus.

The invention is described below in more detail.

Among the components constituting the flame-retardant aromatic polyester copolymer (A) according to the present invention, the component (a) mainly comprises an aromatic dicarboxylic acid or an ester-forming derivative thereof. Representative examples thereof include terephthalic acid and derivatives thereof. If necessary, an auxiliary component may be used and examples thereof include dicarboxylic acids such as isophthalic, naphthalenecarboxylic and naphthalenedicarboxylic acids and derivatives thereof; aliphatic acids such as adipic, sebacic, trimellitic and succinic acids and ester-forming derivatives thereof and aromatic hydroxy carboxylic acids such as hydroxybenzoic and hydroxynaphthoic acids and ester-forming derivatives thereof.

The component (b) constituting the polyester copolymer of the present invention mainly comprises an aliphatic diol or an ester-forming derivative thereof. Representative examples thereof include $C_{2-8}$ low-molecular weight glycols such as ethylene glycol, 1,4-butylene glycol, 1,3-propanediol, 1,4-butenediol, 1,6-hexanediol and 1,8-octanediol. Further, a high-molecular weight glycol such as polyalkylene oxide glycol may be used together with the above low-molecular weight glycol. Examples of the high molecular weight glycol include polyethylene oxide glycol and polybutylene oxide glycol. The simultaneous use of such a high-molecular weight glycol is quite effective in improving the elongation of an aromatic polyester and in imparting flex resistance thereto. Furthermore, the component (b) may contain an aromatic alcohol such as bisphenol A, 4,4′-dihydroxybiphenyl or a phosphinic acid containing aromatic diol groups; an alkylene oxide adduct alcohol such as adduct of bisphenol A with 2 mol of ethylene oxide or propylene oxide; a polyhydroxy compound such as glycerin or pentaerythritol or an ester-forming derivative therof as an auxiliary component.

According to the present invention, a halogenated, ester forming compound is used in the preparation of the polyester copolymer (A) as the component (c) to produce an aromatic polyester containing halogen atoms in its molecule. Examples of such a halogenated compound include those represented by the following general formulae (2) to (9), wherein the halogen is preferably bromine:

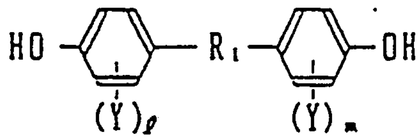
(2)

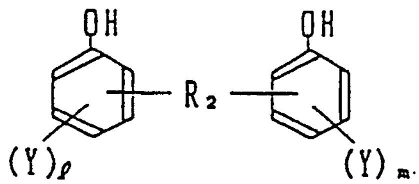
(3)

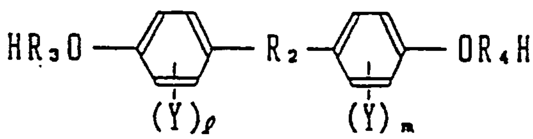
(4)

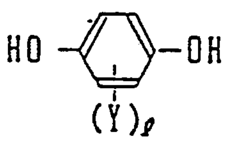
(5)

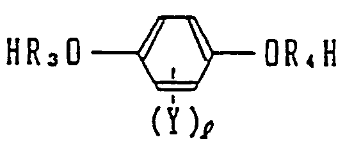
(6)

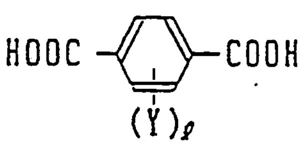
(7)

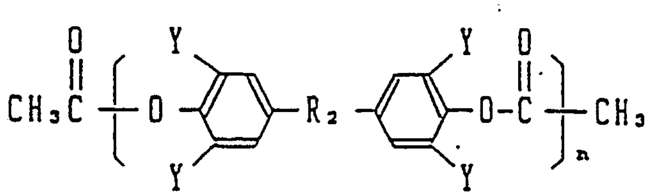
(8)

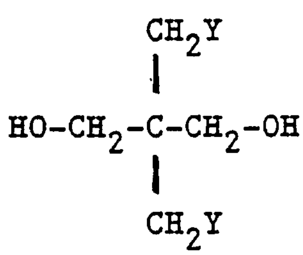
(9)

wherein

$$R_1,\ R_2:\ -CH_2-,\ -\underset{CH_3}{\overset{CH_3}{\overset{|}{\underset{|}{C}}}}-,\ -O-,\ -S-,\ -SO_2$$

$R_3$, $R_4$: $-(C_2H_4O)_n-$, $(C_3H_6O)_n-$
Y: halogen
m: 1 to 4
n: an integer of 1 or above

Among them, the compounds represented by the general formulae (2) to (8) are particularly preferably incorporated into the polyester copolymer. Further, it is preferred that the halogenated compound have at least 4 halogen atoms in its molecule. When the halogen is bromine, the compound of the general formula (2) includes tetrabromobisphenol A and tetrabromobisphenol sulfone; the compound of the general formula (3) includes tetrabromobisphenol F; the compound of the general formula (4) includes an adduct of tetrabromobisphenol A with 2 mol of ethylene oxide, an adduct of tetrabromobisphenol A with 2 mol of propylene oxide, an adduct of tetrabromobisphenol sulfone with 2 mol of ethylene oxide and an adduct of tetrabromobisphenol sulfone with 2 mol of propylene oxide; the compound of the general formula (5) includes tetrabromohydroquinone; the compound of the formula (6) includes an adduct of tetrabromohydroquinone with 2 mol of ethylene oxide; the compound of the formula (7) includes tetrabromoterephthalic acid and the compound of the formula (8) includes tetrabromobisphenol A polycarbonate.

It is preferred that the halogenated compound to be incorporated into the polyester compolymer have a molecular weight of a least 390. If the molecular weight thereof is too low, the compound will not contribute to an increase in the oxygen index which is an indication of flame retardancy. Further, it is preferable that the compound have at least one aromatic ring in its molecule.

The halogenated compound is added in such an amount that the halogen content of the resulting copolyester is 0.5 to 30% by weight, preferably 2 to 20% by weight. If the content is less than 0.5% by weight, no sufficiently high flame retardancy will be attained, while if the content exceeds 30% by weight, the mechanical characteristics will be undesirably lowered.

With respect to the relative amounts of the monomers for preparing the polyester copolymer to be used in the present invention, when the ester-forming functional group of halogenated compound (c) is an alcoholic group, the total amount of the components (b) and (c) is 90 to 200 mol, preferably 95 to 150 mol per 100 mol of the component (a). When the ester-forming functional group thereof is a carboxyl group, the amount of the component (b) is 90 to 200 mol, preferably 95 to 150 mol per 100 mol of the total amount of the components (a) and (c).

When the polyester copolymer is required to have a higher oxygen index from the standpoint of service conditions, this requirement can be attained by suitably adjusting the content of the component (c) in the copolymer to control the halogen content of the copolymer.

The polyester to be used as the component (B) in the present invention is (B-1) an olefin copolymer comprising an $\alpha$-olefin and a glycidyl ester of an $\alpha,\beta$-unsaturated acid or (B-2) a graft copolymer comprising said olefin copolymer (B-1) and one or more polymers or copolymers mainly comprising repeating units represented by the general formula (1):

$$-(-CH_2-\underset{X}{\overset{R}{\overset{|}{\underset{|}{C}}}}-)- \qquad (1)$$

wherein R is a hydrogen atom or a lower alkyl group and X is one or more groups selected from among preferably

$-COOH$, $-COOCH_3$, $-COOC_2H_5$, $-COOC_4H_9$

$-COOCH_2CH(C_2H_5)C_4H_9$, 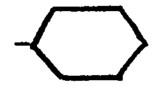 , and $-CN$,

which are chemically bonded to each other to form a branched or crosslinked structure.

First, the olefin copolymer (B-1) which is one of the polymers useful as the component (B) will be described.

The $\alpha$-olefin which is one of the monomers constituting the olefin copolymer (B-1) includes ethylene, propylene and butene-1, among which ethylene is preferable. The glycidyl ester of an $\alpha,\beta$-unsaturated acid which is the other monomer constituting the copolymer (B-1) is a compound represented by the general formula (10):

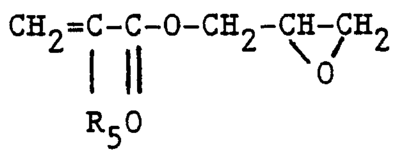

(10)

wherein $R_5$ is a hydrogen atom or a lower alkyl group,
and examples thereof include glycidyl acrylate, glycidyl methacrylate and glycidyl ethacrylate, among which glycidyl methacrylate if preferable. The olefin copolymer (B-1) can be prepared by the radical polymerization of an $\alpha$-olefin (such as ethylene) with a glycidyl ester of an $\alpha,\beta$-unsaturated acid according to a conventional method. It is preferred that the olefin copolymer (B-1) comprise 70 to 99 % by weight of an $\alpha$-olefin and 30 to 1 % by weight of a glycidyl of an $\alpha,\beta$-unsaturated acid.

Next the graft copolymer (B-2) which is the other polymer useful as the component (B) will be described.

The graft copolymer is one comprising the above-mentioned olefin copolymer (B-1) and one or more polymers or copolymers comprising repeating units represented by the general formula (1) which are chemically bonded to each other to form a branched or crosslinked structure. The polymer or copolymer to be grafted include polymethyl methacrylate, polyethyl acrylate, polybutyl acrylate, poly-2-ethylhexyl acrylate, polystyrene, polyacrylonitrile, acrylonitrile-styrene copolymer, butyl acrylate-methyl methacrylate copolymer and butyl acrylate-styrene copolymer. These polymers or copolymers can be prepared by the radical polymerization of the corresponding vinyl monomers.

The graft copolymer comprising the olefin copolymer (B-1) and the above described specific (co)-polymer can be easily prepared by the radical reaction, through the process for the preparation thereof is not particularly limited. For example, a specific (co)polymer as described above is reacted with a peroxide or the like to generate free radicals and the resulting (co)polymer is melt-kneaded with an olefin copolymer (B-1) to give a graft copolymer (B-2).

It is preferable that the weight ratio of the olefin copolymer (B-1) to the specific (co)polymer to be grafted thereto be between 95:5 and 40:60.

The olefin copolymer (B-1) and graft copolymer (B-2) thus prepared are both useful as the component (B) according to the present invention and may be used alone or as a mixture of two or more of them. Particularly, the use of the graft copolymer (B-2) as the component (B) is superior to that of the olefin copolymer (B-1), because the former lowers the modulus or stiffness less than the latter does, though it is a matter of course that the use of the graft compolymer (B-2) brings about considerably improved impact resistance.

According to the present invention, the flame retardant aromatic polyester copolymer (A) and the component (B) are used in a weight ratio of between 99:1 and 40:60, preferably between 95:5 and 50:50, most preferably between 90:10 and 60:40.

If the amount of the component (B) is too small, an improvement in the impact resistance which is one of the objects of the present invention will not be attained, while if the amount thereof is too large, the thermal deformation temperature will be lowered and the mechanical properties such as stiffness will be undesirably damaged.

According to the present invention, an auxiliary flame retardant, for example, oxide or hydroxide of

metal, such as antimony trioxide, antimony halide, aluminium hydroxide or magnesium hydroxide may be used simultaneous to give a further improvement in the flame retardancy.

The components (A) and (B) may be converted into a kneaded mixture having a form selected depending upon the object by a conventional melt kneading method using conventional equipment. For example, the components (A) and (B) are preliminarily mixed with each other in pellet, powder or granular form with a blender or the like, melt-kneaded and extruded with a single- or twin-screw extruder into a pellet, strand, sheet or other arbitrary shapes selected depending upon the subsequent treatment and subjected to such treatment.

It is preferable that the above kneaded mixture be in a state wherein the flame-retardant aromatic polyester copolymer (A) and the olefin copolymer (B-1) or graft copolymer (B-2) are closely dispersed in each other as fine particles.

According to the present invention, the above kneaded mixture is solidified by cooling before thermally treated in an inert gas atmosphere or under a reduced pressure of less than 1.33kPa (10 torr) at a specific temperature. The thermal treatment should be carried out for at least one hour, preferably for 5 hours or longer, at a temperature which is 120° C or above but does not exceed the melting point of the mixture. The temperature is preferably 150 to 210° C. If the temperature is lower than 120° C, an insufficient effect of the present invention will be exhibited or it will take a lot of time to achieve the effect. The heating time varies depending upon the temperature, i.e., the higher the temperature, the shorter the time.

The thermal treatment may be carried out according to a conventional process for the solid phase polmerization of a polyester by a batch-wise or continuous method or a combination thereof.

When the thermal treatment is carried out in an inert gas atmosphere, suitable inert gases include helium, nitrogen, neon, argon, krypton and xenon, among which helium, nitrogen and argon are preferably used.

When the thermal treatment is carried out under a reduced pressure, the residual air pressure should be less than 1.33kPa (10 torr). If the thermal treatment is carried out under a residual air pressure exceeding 1.33kPa (10 torr), the flame-retardant aromatic polyester copolymer is decomposed by oxidation to give a considerable and undesirable reduction in the physical properties of the resin.

As described above, the present invention is characterized by thermally treating a kneaded mixture comprising the specific flame-retardant aromatic polyester copolymer (A) together with the above olefin copolymer (B-1) or graft copolymer (B-2) in an inert gas atmosphere or under a reduced pressure of less than 1.33kPa (10 torr) at a temperature which is greater than 120° C but not greater than the melting point of the mixture, whereby unique characteristics are achieved which cannot be attained merely by melt-kneading.

It is well known that when a molded article of a polyester resin is thermally treated, the mechanical properties thereof are changed owing to a change in molecular orientation and the like. Further, it is also known that the degree of polymerization of a polyester resin is increased by solid-phase polymerization to bring about enhancement in the tensile strength and impact strength. Surprisingly, the unique characteristics of the halogenated polyester resin according to the present invention are those resulting neither from the change in molecular orientation caused by so-called annealing of the polyester nor from only the increase in the degree of polymerization caused by solid-phase polymerization. In other words, the improved halogenated polyester resin pellets obtained according to the present invention exhibit very high impact resistance merely by molding, which proves that the unique characteristics of the resin are not those merely resulting from annealing. Further, the polyester resin according to the present invention exhibits far higher impact resistance (toughness) than that of a blend obtained by melt-kneading the component (B) together with a polyester having a degree of polymerization preliminarily enhanced by solid-phase polymerization and is also improved in other properties, which suggests that the unique characteristics of the polyester according to the present invention are not those merely resulting from the so-called annealing and the increase in the degree of polymerization.

Accordingly, the improvement in impact resistance (toughness) attained by the thermal treatment of a kneaded mixture comprising the polyester compolymer (A) and the olefin copolymer or graft copolymer (B) is thought to result neither from the annealing alone nor from the increase in the degree of polymerization alone, but from the branched or crosslinked structure formed by the chemical bonding between the components (A) and (B) caused by the thermal treatment. The formation of a branched structure is supported not only by the considerably improved' impact resistance of the polyester resin of the present invention, but also by the dynamic viscoelastic behavior thereof in a molten state. For example, the polyester resin of the present invention exhibits higher die swelling than that of a polyester having a degree of polymerization enhanced only by solid-phase polymerization, which suggests that the polyester of the present invention has a branched structure.

The improved thermoplastic polyester resin of the present invention may be molded by any of injection, extrusion, compression, expansion, blowing and vacuum forming. Any molded article of the resin is characterized in that the impact resistance is markedly improved without lowering the modulus and stiffness.

Alternatively, the melt-kneading of the components (A) and (B) may be carrier out simultaneously with the molding thereof, followed by the thermal treatment of the obtained molded article under specified conditions. In such a case the objective characteristics according to the present invention can be imparted to the molded article.

The addition of an inorganic filler (C) to the halogenated polyester resin is not essential but is preferable for producing a molded article having good mechanical strength, heat resistance, dimensional stability (resistance to deformation and warpage), and electrical and other properties. The filler addition may be carried out at any chosen stage in the course of the preparation. The inorganic filler (C) may be selected among fibrous, powdery, granular and flaky ones depending upon the end use.

Examples of fibrous fillers include inorganic fibrous materials, such as glass fiber, asbestos fiber, carbon fiber, silica fiber, silica/alumina fiber, zirconia fiber, boron nitride fiber, silicon nitride fiber, boron fiber, potassium titanate fiber and fibers of metals such as stainless steel, aluminium, titanium, copper or brass. Among them, glass fiber and carbon fiber are the most representative.

Further, high-melting organic fibrous materials similar to the above inorganic fibrous filler may be used. Particular examples thereof include polyamides, fluororesins and acrylic resins.

Examples of powdery or granular fillers include carbon black, silica, quartz powder, glass beads, glass powder, silicates such as calcium silicate, aluminium silicate, kaolin, talc, clay, diatomaceous earth and wollastonite; metal oxides such as iron oxides, titanium oxide, zinc oxide and alumina; metal carbonates such as calcium carbonate and magnesium carbonate; metal sulfates such as calcium sulfate and barium sulfate; silicon carbide, silicon nitride, boron nitride and various metal powders.

Examples of flaky fillers include mica, glass flake and various metal foils.

These inorganic fillers (C) may be used alone or as a mixture of two or more of them. The simultaneous use of a fibrous filler, particularly glass or carbon fiber, with a granular or flaky filler is particularly effective in producing an article which not only has excellent mechanical strength but also good dimensional accuracy and electrical properties.

If necessary, a coupling agent or surface treatment is preferably used together with these fillers. Examples thereof include functional compounds such as epoxy, isocyanate, silane and titanate compounds. These compounds may be applied to the filler prior to the preparation of the composition or may be added in the course of the preparation thereof.

The inorganic filler (C) is added in an amount of 5 to 120 parts by weight per 100 parts by weight of the mixture comprising the components (A) and (B). If the amount of the filler (C) exceeds 120 parts by weight, the moldability of the resulting composition will be very low.

The improved halogenated polyester resin of the present invention may additionally contain a small amount of another thermoplastic resin as an auxilliary to the above components as far as the object is not hindered. Examples of such other thermoplastic resins include thermoplastic polyesters (other than the flame-retardant aromatic polyester resins according to the present invention), polyamides, ABS, polyphenylene oxide, polyalkyl acrylate, polyacetal, polysulfone, polyether sulfone, polyether imide, polyether keytone, phenoxy resins and fluororesins. These resins may be also used as a mixture of two or more of them.

An auxiliary thermoplastic resin as described above may be added to the components (A) and (B) in the course of the preparation of the improved thermoplastic resin according to the present invention, followed by the melt-kneading. In such a case, the effect of the present invention can be attained in its own way.

The halogenated polyester resin of the present invention may suitably contain one or more conventional additives which are generally added to a thermoplastic or thermosetting resin. Examples of such additives include stabilizers such as antioxidants and ultraviolet absorbers, antistatic agents, flame retardants, coloring agents such as dyes and pigments, lubricants, crystallization accelerators and nucleating agents.

The above inorganic filler and additives may be added at any chosen stage in the course of the preparation of the improved halogenated polyester resin according to the present invention. For example, they may be added and mixed just before the production of a final molded article.

The improved halogenated polyester according to the present invention is remarkably improved in impact strength without largely damaging the other physical properties, as compared with the original halogenated polyester. That is, the improved halogenated polyester prepared by the process of the present invention which is characterized by involving a specific thermal treatment is a remarkably tough flame-retardant polyester which exhibits tensile and flexural strength and modulus nearly equivalent to those of an

intermediate mixture obtained merely by melt-kneading the constituents; it keeps excellent flame retardancy by virtue of the presence of halogen atoms in the molecule of the base polymer, while overcoming problems such as bleeding of a flame retardant or lowering in the physical properties which are problematic in an ordinary composition containing a flame retardant added thereto, and is remarkably improved in impact resistance. The improved halogenated polyester resin according to the present invention can be used in a field where high stiffness, high impact resistance and flame retardancy are required. For example, it can be favorably used for electrical components (such as connectors) and office automation OA machines (such as housings).

Example

The present invention will now be described in more detail by referring to the following Examples, though it is not limited to them. The properties of the products were evaluated by the following methods:

Izod impact strength: a test piece 3.2-mm thick was examined for notched Izod impact strength (kg.cm/cm) according to ASTM D256.

Tensile strength: tensile strength ($kg/cm^2$) was determined according to ASTM D638.

Flexural test: a test piece 6.4-mm thick was examined for flexural strength ($kg/cm^2$) according to ASTM D790.

Flame retardancy: determined according to UL-94V and evaluated according to the following criteria:

◎ : flame went out within 15 seconds

○ : flame went out within 30 seconds

Δ : flame went out in 30 to 60 seconds

X : flame did not go out even after 60 seconds

Examples 1 to 7

A brominated polybutylene terephthalate having an intrinsic viscosity of 0.85 (which will be described below) (component (A)) was mixed with a copolymer given in Table 1 (component (B)) in a ratio given in Table 1 and melt-kneaded and pelletized with an extruder at 250 °C. The obtained pellets were thermally treated under the conditions given in Table 1 and injection molded into various test pieces. The test pieces were examined according to the above-mentioned test methods. The results are shown in Table 1.

Examples 8 to 12

The same procedure as the one employed in Example 2 was repeated except that the pellets were thermally treated under the conditions given in Table 1.

Comparative Examples 1 and 2

A brominated polybutylene terephthalate having in intrinsic viscosity of 0.85 was pelletized alone in a similar manner to the one described in Example 1. The pellets were injection molded without any thermal treatment (Comparative Example 1) or after similar thermal treatment to that described in Example 1 (Comparative Example 2). The physical properties of both of the molded articles thus obtained are shown in Table 1.

Comparative Examples 3 to 9

The pellets prepared in Examples 1 to 7 were molded without any thermal treatment. The obtained molded articles were examined for physical properties. The results are shown in Table 1.

Comparative Example 10

A brominated polybutylene terephthalate which had been solid-phase polymerized by thermal treatment in a similar manner to that described in Comparative Example 2 was mixed with a copolymer (B-1) in a ratio given in Table 1. The obtained mixture was melt-kneaded, pelletized and molded without any thermal treatment. The obtained molded article was examined for physical properties. The results are shown in Table 1.

Comparative Example 11

The pellets obtained in Example 2 were thermally treated in air under the conditions given in Table 1 and molded. The obtained molded article was examined for physical properties. The results are shown in Table 1.

Comparative Examples 12 to 14

Decabromodiphenyl ether was added as a flame retardant to a polybutylene terephthalate having an intrinsic viscosity of 0.85, followed by the addition of a copolymer (B). The obtained mixture was pelletized in a similar manner to that of Example 1 and molded without any thermal treatment. The molded article was examined for physical properties. The results were given in Table 1.

Examples 13 to 16

The pellets were prepared by the same procedure as that described in Example 1 except that glass fibers or glass beads were further mixed with the brominated polybutylene terephthalate and the copolymer (B) in a ratio given in Table 2, the pellets were thermally treated under the conditions given in Table 2 and molded. The molded articles were examined for physical properties. The results are shown in Table 2.

Comparative Examples 15 to 18

The pellets prepared in Examples 13 to 16 were molded without any thermal treatment. The molded articles thus obtained were examined for physical properties. The results are shown in Table 2.

Example 17

The same brominated polybutylene terephthalate and copolymer (B-1) as those used in Example 2 were mixed with each other in a ratio given in Table 2, pelletized and thermally treated in a similar manner to that of Example 2. The resulting pellets were mixed with glass fibers in a ratio given in Table 2. The obtained mixture was melt-kneaded and pelletized with an extruder at 250 °C. The obtained pellets were molded in a similar manner to the one described in Example 2 and examined for physical properties. The results are shown in Table 2.

The brominated polybutylene terephthalate used above is a polyester copolymer prepared by copolymerizing dimethyl terephthalate with 1,4-butanediol and an adduct of tetrabromobisphenol A with 2 mol of ethylene oxide and having an intrinsic viscosity of 0.85 and a bromine content of 6.5% by weight.

The copolymers used as the component (B) in the Examples and Comparative Examples, and the abbreviations used in Tables 1 and 2 for their constituents and contents, are as follows;

B-1 E/GMA: ethylene-glycidyl methacrylate (85:15) copolymer

B-2 E/GMA-g-PMMA: graft copolymer comprising E/GMA(70) and polymethyl methacrylate (30)

E/GMA-g-AN/S: graft copolymer comprising E/GMA(70) and acrylonitrile-styrene copolymer (30)

Table 1

| | | Unit | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| A | brominated polybutylene terephthalate | pts. by wt. | 95 | 90 | 80 | 95 | 90 | 80 | 90 | 90 | 90 | 90 | 90 | 90 |
| | polybutylene terephthalate | 〃 | — | — | — | — | — | — | — | — | — | — | — | — |
| B-1 | E/GMA | 〃 | 5 | 10 | 20 | — | — | — | — | 10 | 10 | 10 | 10 | 10 |
| B-2 | E/GMA-g-PMMA | 〃 | — | — | — | 5 | 10 | 20 | — | — | — | — | — | — |
| B-2 | E/GMA-g-AN/S | 〃 | — | — | — | — | — | — | 10 | — | — | — | — | — |
| Additive | decabromodiphenyl ether | 〃 | — | — | — | — | — | — | — | — | — | — | — | — |
| Conditions of thermal treatment | temp. | ℃ | 200 | 200 | 200 | 200 | 200 | 200 | 200 | 200 | 200 | 180 | 150 | 200 |
| | atmosphere | — | $N_2$ *1 | $N_2$ | $N_2$ | $N_2$ | $N_2$ | $N_2$ | $N_2$ | $N_2$ | $N_2$ | $N_2$ | $N_2$ | 1Torr *2 |
| | time | hr | 20 | 20 | 20 | 20 | 20 | 20 | 20 | 6 | 12 | 30 | 40 | 20 |
| Izod impact strength (notched) | | kg · cm/cm | 19.1 | 83.0 | 105 | 21.3 | 98.6 | 112 | 93.2 | 28.0 | 48.0 | 65.4 | 57.7 | 91.3 |
| Tensile strength | | $kg/cm^2$ | 504 | 447 | 368 | 521 | 471 | 380 | 477 | 451 | 450 | 460 | 459 | 454 |
| Flexural strength | | $kg/cm^2$ | 716 | 631 | 488 | 758 | 690 | 523 | 688 | 644 | 640 | 641 | 651 | 645 |
| Flexural modulus | | $kg/cm^2$ | 20900 | 18500 | 14600 | 23000 | 20700 | 16000 | 20600 | 18900 | 18600 | 18700 | 19100 | 18500 |
| Flame retardance | | — | ◎ | ○ | △ | ◎ | ○ | △ | ○ | ○ | ○ | ○ | ○ | ○ |

*1: in a stream of nitrogen

*2: under a reduced pressure of 1 Torr

Table 1 (continued)

| | | Unit | Comparative Example | | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 |
| A | brominated polybutylene terephthalate | pts. by wt. | 100 | 100 | 95 | 90 | 80 | 95 | 90 | 80 | 90 | 90*3 | 90 | — | — | — |
| | polybutylene terephthalate | 〃 | — | — | — | — | — | — | — | — | — | — | — | 80 | 80 | 80 |
| B-1 | E/GMA | 〃 | — | — | 5 | 10 | 20 | — | — | — | — | 10 | 10 | 10 | — | — |
| B-2 | E/GMA-g-PMMA | 〃 | — | — | — | — | — | 5 | 10 | 20 | — | — | — | — | 10 | — |
| B-2 | E/GMA-g-AN/S | 〃 | — | — | — | — | — | — | — | — | 10 | — | — | — | — | 10 |
| Additive | decabromodiphenyl ether | 〃 | — | — | — | — | — | — | — | — | — | — | — | 10 | 10 | 10 |
| Conditions of thermal treatment | temp. | ℃ | — | 200 | — | — | — | — | — | — | — | — | 200 | — | — | — |
| | atmosphere | — | — | $N_2$ | — | — | — | — | — | — | — | — | 空気 | — | — | — |
| | time | hr | — | 20 | — | — | — | — | — | — | — | — | 20 | — | — | — |
| Izod impact strength (notched) | | kg · cm/cm | 2.8 | 3.3 | 6.3 | 9.9 | 30.5 | 7.5 | 12.0 | 33.8 | 11.5 | 11.3 | 3.8 | 8.9 | 11.8 | 10.3 |
| Tensile strength | | kg/cm² | 534 | 527 | 511 | 452 | 371 | 536 | 401 | 391 | 480 | 455 | 365 | 487 | 491 | 490 |
| Flexural strength | | kg/cm² | 870 | 861 | 720 | 646 | 495 | 772 | 695 | 528 | 691 | 637 | 520 | 703 | 715 | 705 |
| Flexural modulus | | kg/cm² | 25500 | 24900 | 21200 | 19100 | 14900 | 23800 | 20900 | 16400 | 21000 | 18700 | 16300 | 20500 | 21500 | 21000 |
| Flame retardance | | — | ◎ | ◎ | ◎ | ○ | △ | ◎ | ○ | △ | ○ | ○ | ○ | ○*4 | ○*4 | ○*4 |

*3: A mixture obtained by melt-kneading E/GMA together with a brominated polybutylene terephthalate solid-phase polymerized preliminarily in a stream of nitrogen (Comparative Example 2) was molded and evaluated.

*4: Bleeding of a flame retardant was observed on the surface of a molded test piece.

Table 2

| | | Unit | Example | | | | | Comparative Example | | | |
|---|---|---|---|---|---|---|---|---|---|---|---|
| | | | 13 | 14 | 15 | 16 | 17 | 15 | 16 | 17 | 18 |
| A | brominated polybutylene terephthalate | pts. by wt. | 75 | 75 | 75 | 60 | 75*1 | 75 | 75 | 75 | 60 |
| B-1 | E/GMA | pts. by wt. | 10 | — | — | 10 | 10 | 10 | — | — | 10 |
| B-2 | E/GMA-g-PMMA | pts. by wt. | — | 10 | — | — | — | — | 10 | — | — |
| B-2 | E/GMA-g-AN/S | pts. by wt. | — | — | 10 | — | — | — | — | 10 | — |
| C | glass fiber | pts. by wt. | 15 | 15 | 15 | — | 15 | 15 | 15 | 15 | — |
| C | glass fiber | pts. by wt. | — | — | — | 30 | — | — | — | — | 30 |
| Conditions of thermal treatment | temp. | °C | 200 | 200 | 200 | 200 | 200 | — | — | — | — |
| | atmosphere | — | $N_2$ | $N_2$ | $N_2$ | $N_2$ | $N_2$ | — | — | — | — |
| | time | hr | 20 | 20 | 20 | 20 | 20 | — | — | — | — |
| Izod impact strength (notched) | | kg•cm/cm | 12.5 | 14.4 | 13.5 | 6.0 | 14.7 | 8.3 | 9.5 | 8.8 | 3.5 |
| Tensile strength | | $kg/cm^2$ | 760 | 775 | 778 | 422 | 757 | 764 | 779 | 772 | 433 |
| Flexural strength | | $kg/cm^2$ | 1232 | 1250 | 1244 | 819 | 1235 | 1239 | 1252 | 1242 | 830 |
| Flexural modulus | | $kg/cm^2$ | 39100 | 41200 | 40700 | 37000 | 39200 | 39300 | 41300 | 41100 | 37800 |
| Flame retardance | | — | ○ | ○ | ○ | ○ | ○ | ○ | ○ | ○ | ○ |

*1: A kneaded mixture comprising a brominated polybutylene terephthalate and E/GMA was thermally treated and kneaded together with glass fiber and the obtained mixture was evaluated.

## Claims

1. An improved halogenated polyester resin which is prepared by melt-kneading
(A) 99 to 40 parts by weight of a flame-retardant aromatic polyester prepared by the polycondensation of
(a) a component mainly comprising an aromatic dicarboxylic acid or an ester-forming derivative thereof with
(b) a component mainly comprising an aliphatic glycol or an ester-forming derivative thereof and
(c) a halogenated ester-forming compound, and having a halogen content of 0.5 to 30% by weight together with
(B) 1 to 60 parts by weight of (B-1) an olefin copolymer comprising an α-olefin and a glycidyl ester of an α,β-unsaturated acid or (B-2) a graft copolymer comprising said olefin copolymer (B-1) and one or more polymers or copolymers mainly comprising repeating units represented by the following general formula (1):

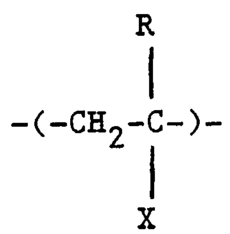

(1)

wherein R is a hydrogen atom or a lower alkyl group and X is one or more groups selected from among -COOH, $-COOR_6$, phenyl and cyano, $R_6$ being an alkyl having 1 to 8 carbon atoms, either straight or branched, which are chemically bonded to each other to form a branched or crosslinked structure, solidifying the molten mixture by cooling and thermally treating the resulting mixture for at least one hour in an inert gas atmosphere or under a reduced pressure of less than 1.33kPa (10 torr) and at a temperature greater than 120° C but not greater than the melting point of the mixture, thereby to effect the solid phase reaction of the components (A) and (B).

2. An improved halogenated polyester resin as set forth in claim 1, wherein said thermal treatment is carried out at a temperature of 150 to 210° C.

3. An improved halogenated polyester resin as set forth in claim 1 or 2, wherein the halogen atom of the compound (c) is bromine.

4. An improved halogenated polyester resin as set forth in any preceding claim, wherein the aliphatic glycol (b) is a $C_{2-8}$ low-molecular weight glycol.

5. An improved halogenated polyester resin as set forth in any preceding claim, wherein the aliphatic glycol (b) is a combination of a $C_{2-8}$ low molecular weight glycol and a polyalkylene oxide glycol having a molecular weight of 200 to 4000.

6. An improved halogenated polyester resin as set forth in claims 4 or 5, wherein said $C_{2-8}$ low molecular weight glycol is one or more members selected from among ethylene glycol, 1,4-butylene glycol and 1,4-butene gylcol.

7. An improved halogenated polyester resin as set forth in any preceding claim, wherein the halogenated, ester-forming compound (c) contains at least 4 halogen atoms in its molecule.

8. An improved halogenated polyester resin as set forth in any preceding claim, wherein the olefin copolymer (B-1) is a copolymer comprising ethylene and a glycidyl ester of an α,β-unsaturated acid.

9. An improved halogenated polyester resin as set forth in any preceding claim, which further contains (C) 5 to 120 parts by weight of an inorganic filler per 100 parts by weight of the total amount of the resinous components (A) and (B).

10. An improved halogenated polyester resin which is prepared by melt-kneading
(A) 99 to 40 parts by weight of a flame-retardant aromatic polyester prepared by the polycondensation of
(a) a component mainly comprising an aromatic dicarboxylic acid or an ester-forming derivative thereof with
(b) a component mainly comprising an aliphatic glycol or an ester-forming derivative thereof and
(c) a halogenated ester-forming compound, and having a halogen content of 0.5 to 30% by weight together

with

(B) 1 to 60 parts by weight of (B-1) an olefin copolymer comprising an α-olefin and a glycidyl ester of an α,β-unsaturated acid of (B-2) a graft copolymer comprising said olefin copolymer (B-1) and one or more polymers or copolymers mainly comprising repeating units represented by the following general formula (1):

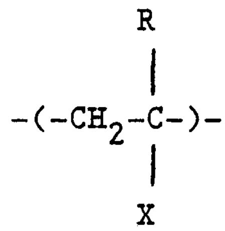

(1)

wherein R is a hydrogen atom or a lower alkyl group and X is one or more groups selected from among -COOH, -COOR$_6$, phenyl and cyano, R$_6$ being an alkyl having 1 to 8 carbon atoms, either straight or branched, which are chemically bonded to each other to form a branched or crosslinked structure,

solidifying the molten mixture by cooling and thermally treating the resulting mixture for at least one hour in an inert gas atmosphere or under a reduced pressure of less than 1.33kPa (10 torr) and at a temperature greater than 120 °C but not greater than the melting point of the mixture.

11. A process for the preparation of an improved halogenated polyester resin as set forth in claim 10, characterized by adding (C) an inorganic filler at a chosen stage of the preparation of said resin or after the preparation thereof in an amount of 5 to 120 parts by weight per 100 parts by weight of the total amount of the resinous components (A) and (B) and homogeneously mixing them with each other in a state wherein the resinous components are molten.